# EUROPEAN PATENT APPLICATION

(11) **EP 1 288 857 A2**
(43) Date of publication of application: **05.03.2003**
(21) Application number: 02255923.1
(22) Date of filing: 27.08.2002
(51) Int. Cl.: G06T 5/50

(54) **System and method for generating high-resolution images via resolution-limited devices**

(30) Priority: 04.09.2001 US 946126
(71) Applicant: Hewlett-Packard Company, Palo Alto, CA 94304 (US)
(72) Inventor: Hanks, Darwin Mitchell, Fort Collins, CO 80525 (US)
(74) Representative: Jackson, Richard Eric

(57) **Abstract**

An apparatus (18) for generating a high-resolution image comprises a processor (60), a memory (62) coupled to the processor (60), and a generation routine (70) stored in the memory (62) and executable by the processor (60). The generation routine (70) is adapted to receive a plurality of sub-images from a medium player (14) where the medium player (14) is generally associated with providing a resolution limited image to a display device (16). The generation routine (70) is further adapted to generate the high-resolution image from the plurality of sub-images.

## Description

### TECHNICAL FIELD OF THE INVENTION

The present invention relates generally to the field of data storage and retrieval and, more particularly, to a system and method for generating high-resolution images via resolution-limited devices.

### BACKGROUND OF THE INVENTION

Audio/video devices, such as televisions or video projectors, may be used for personal or professional presentations to display audio content and visual images in the form of, for example, slide shows, movies, or film clips. As a result of advancements in data storage technology, video compact discs (VCDs) and digital video discs (DVDs) are generally used to store the audio/visual data. The audio/visual data may then be displayed using conventional DVD players. The audio/visual data contained on the VCDs or DVDs may be either prerecorded by a manufacturer or distributor or recorded by the user using conventional VCD-/DVD-Read/Write software applications and devices.

However, because the resolution of audio/visual display devices is limited, the resolution of the visual image data generally recorded on the VCDs and DVDs is similarly limited. For example, the resolution of the visual image data stored on a typical VCD or DVD is generally limited to 320x240, 720x480, or similar pixel resolution values. Thus, if a snapshot or printed copy of the displayed image is desired, the resolution of the snapshot or printed copy is generally limited to the displayed resolution. Additionally, although higher resolution image data may be recorded on the VCD/DVD, providing a snapshot or printed copy of the higher resolution image generally requires transferring the VCD/DVD to a computer, downloading the higher resolution image data to the computer, and transmitting the downloaded data to a printer or other type of output device.

### SUMMARY OF THE INVENTION

In accordance with one embodiment of the present invention, an apparatus for generating a high-resolution image comprises a processor, a memory coupled to the processor, and a generation routine stored in the memory and executable by the processor. The generation routine is adapted to receive a plurality of sub-images from a medium player where the medium player is generally associated with providing a resolution-limited image to a display device. The generation routine is further adapted to generate the high-resolution image from the plurality of sub-images.

In accordance with another embodiment of the present invention, a method for recording a high-resolution image onto a data storage medium comprises receiving the high-resolution image to be recorded onto the data storage medium and generating a plurality of sub-images corresponding to the high-resolution image. The method also comprises generating reconstruction data associated with the plurality of sub-images. The reconstruction data comprises information associated with formation of the high-resolution image using the plurality of sub-images. The method further comprises recording the plurality of sub-images and the reconstruction data onto the data storage medium.

### BRIEF DESCRIPTION OF THE DRAWINGS

For a more complete understanding of the present invention and the advantages thereof, reference is now made to the following descriptions taken in connection with the accompanying drawings in which:
FIGURE 1 is a diagram illustrating a system for generating a high-resolution image via a resolution-limited display device in accordance with an embodiment of the present invention;
FIGURE 2 is a diagram illustrating a system for generating and recording a high-resolution image to a data storage medium in accordance with an embodiment of the present invention;
FIGURE 3 is a diagram illustrating a system for generating the high-resolution image from a data storage medium in accordance with an embodiment of the present invention;
FIGURES 4A and 4B are diagrams illustrating high-resolution image sub-image generation methods in accordance with an embodiment of the present invention;
FIGURE 5 is a flow chart illustrating a method for generating and recording a high-resolution image to a data storage medium in accordance with an embodiment of the present invention; and
FIGURE 6 is a flow chart illustrating a method for generating the high-resolution image from the data storage medium in accordance with an embodiment of the present invention.

### DETAILED DESCRIPTION OF THE DRAWINGS

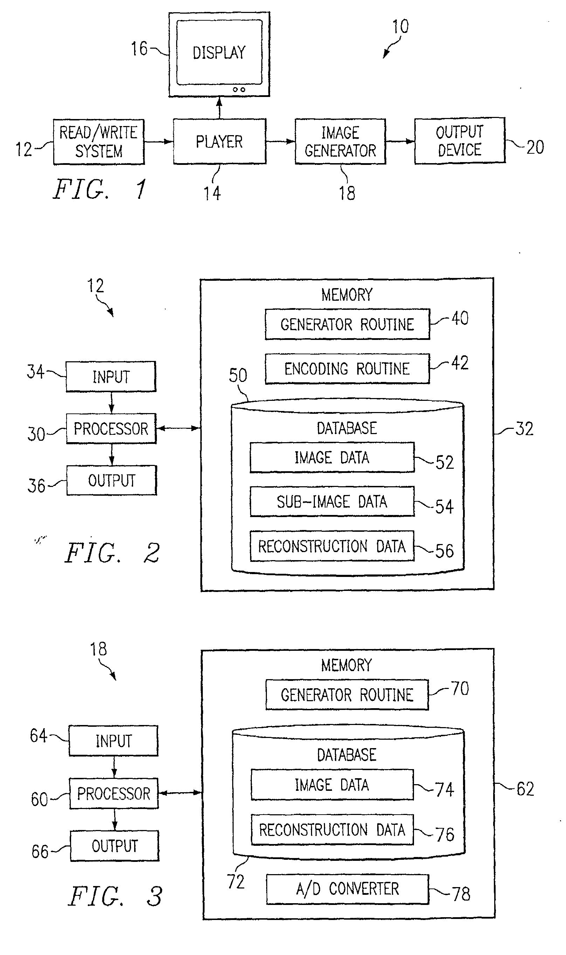

The preferred embodiments of the present invention and the advantages thereof are best understood by referring to FIGURES 1 through 6 of the drawings, like numerals being used for like and corresponding parts of the various drawings.

FIGURE 1 is a diagram illustrating a system 10 for generating a high-resolution image via a resolution-limited display device in accordance with an embodiment of the present invention. In the illustrated embodiment, the system 10 comprises a data storage read/write system 12, a data medium player 14, a display device 16, an image generator 18, and an output device 20. Briefly, the system 10 retrieves a set of sub-images from a data storage medium corresponding to a desired high-resolution image and transmits the sub-image data to an output device via a generally resolution-limited display device 16 using the player 14. The sub-images are then reconstructed to form the desired high-resolution image, which may then be output for distribution at a formal presentation or other purpose.

The data storage read/write system 12 generally comprises hardware and software applications enabling a user to record data to a data storage medium, such as, but not limited to, video compact discs (VCDs), digital video discs (DVDs), data cartridges, cassettes, diskettes, or other types of data storage media. The stored data may be in the form of audio and/or video content. The system 12 may be configured for professional or mass distribution of the data storage media or may be in the form of consumer-based home use applications.

The data medium player 14 comprises hardware and/or software applications that function to read and transmit the audio/video content contained on the data storage media to the display device 16. For example, the player 14 may comprise conventional DVD players or other suitable devices configured to read and transmit data contained on data storage media to various output devices. The display device 16 may comprise a television, projector, computer monitor or other type of computer display, or other type of device configured to display the audio/video content stored on the data storage media and received from the player 14.

In operation, audio/video content or data in the form of, for example, slide shows, movies, film clips, or film stills is recorded onto data storage media using system 12. Because the resolution of image data displayed using the display device 16 is generally limited, the image data stored on the data storage medium is generally recorded at a similar resolution to that available via the display device 16. For example, in the case of conventional televisions, the resolution may be limited to, for example, 720x480 pixels. In accordance with the present invention, high-resolution image data corresponding to a particular slide of a slide presentation or a segment or frame of a movie or film clip is recorded onto the data storage media using the system 12 in the form of a set of sub-images. As used herein, "high-resolution" generally refers to image content having a resolution value greater than a displayable resolution of the display device 16. The sub-image data is "linked," "mapped," or otherwise cross-referenced to the corresponding resolution-limited image data such that, in response to a print or retrieve request from a user, the player 14 accesses a look-up table or other information to determine a location of the corresponding sub-image data on the data storage medium and transfers an optical head or other data reading element of the player 14 to the corresponding location to retrieve the sub-image data. Once retrieved, the sub-image data is transmitted via an output port of the player 14, such as an S-video or composite video output port, to the image generator 18. The image generator 18 then reconstructs the high-resolution image using the sub-image data. The image generator 18 may transmit the reconstructed image data to the output device 20, such as a printer or other suitable output device. However, it should be understood that the image generator 18 may also include output capabilities, thereby alleviating a requirement for a discrete output device 20.

FIGURE 2 is a diagram illustrating the system 12 in accordance with an embodiment of the present invention. As described above, the system 12 is used to read/write data to a data storage medium, such as a VCD, DVD, data cartridge, cassette, diskette, or other types of data storage medium. In the illustrated embodiment, the system 12 comprises a processor 30 and a memory 32. The present invention also encompasses computer software that may be stored in memory 32 and executed by the processor 30. Data may be received from a user of system 10 using a keyboard or any other type of input device 34. Results or data may be output through an output device 36, which may include a display, storage media, or any other type of output device.

The system 12 comprises a generator routine 40 and an encoding routine 42, which are computer software programs. In FIGURE 2, the generator routine 40 and encoding routine 42 are illustrated as being stored in the memory 32, where they can be executed by the processor 30. The system 12 illustrated in FIGURE 2 also includes a database 50. In the illustrated embodiment, the database 50 includes image data 52, sub-image data 54, and reconstruction data 56.

The image data 52 comprises image information. For example, the image data 52 may comprise information associated with the resolution-limited images, which may be in the form of slides, film clips, film stills, or movie content. The image data 52 may also comprise high-resolution image content corresponding to the resolution-limited image content. The image data 52 may further comprise a look-up table or other mapping information that may be recorded onto the data storage medium relating a location of the resolution-limited image content on the data storage medium to a location of the high-resolution image content on the data storage medium. The sub-image data 54 comprises information associated with a high-resolution image or high-resolution image content. For example, as described briefly above, each high-resolution image corresponding to resolution-limited image content is broken down into a plurality of discrete sub-images that are later reconstructed to re-form the high-resolution image. Each sub-image may comprise a portion of the high-resolution image or each sub-image may be otherwise formed such that, when reconstructed, the plurality of sub-images form the high-resolution image. For example, each sub-image may comprise a particular pixel characteristic of the high-resolution image, such as a particular color value, or each sub-image may comprises a different series or set of pixels. Thus, a variety of methods may be used to construct or form the plurality of sub-images. The reconstruction data 56 comprises information associated with reconstructing the high-resolution image using the sub-image data 54. For example, the reconstruction data 56 may include information associated with the resolution value of the high-resolution image, the sequence and/or reconstruction pattern of the sub-images, and other types of information associated with reconstructing the high-resolution image from the sub-image data 54. Additionally, although the different types of information associated with the resolution-limited image content, high-resolution image content, and reconstruction information may be stored as described above, the information may be otherwise combined and/or stored.

In operation, the generator routine 40 generates the sub-image data 54 corresponding to a desired high-resolution image and records the sub-image data 54 to a data storage medium. For example, the generator routine 40 retrieves the image data 52 and breaks up the high-resolution image into a plurality of sub-images according to a desired methodology. The generator routine 40 forms each sub-image having a resolution equal to or less than a displayable resolution of the display device 16. The user of the system 12 may also have the option of designating a desired resolution for the high-resolution image such that the generator routine 40 generates the sub-image data 54 based on the desired resolution value input to the system 12 by the user. The generator routine 40 also generates corresponding location mapping information relating the location of the sub-image data 54 stored on the data storage medium to the location of the resolution-limited image content stored on the data storage medium. The encoding routine 42 encodes the sub-image data 54 into MPEG2 or another suitable data format.

The image data 52 and the sub-image data 54 are then recorded onto the data storage medium. For example, the image data 52 recorded onto the data storage medium may comprise the resolution-limited image content in the form of slides, film clips, film stills, or other resolution-limited image content. The sub-image data 54 recorded onto the data storage medium may comprise the plurality of sub-images corresponding to a high-resolution image. The mapping or location information of the image data 52 and sub-image data 54 is also recorded onto the data storage medium. For example, for a CD, DVD, or other type of data storage medium, the image data 52 and sub-image 54 may be recorded onto different locations of the medium, such as non-contiguous portions of a track of a CD or DVD. The location or mapping information is recorded onto the data storage medium such that a reading head or other device of the system 12 may locate and move between the image data 52 and the sub-image data 54.

FIGURE 3 is a diagram illustrating the image generator 18 in accordance with an embodiment of the present invention. The image generator 18 comprises a processor 60 and a memory 62. The present invention also encompasses computer software that may be stored in the memory 62 and executed by the processor 60. Data may be received from a user of the image generator 18 using a keypad, remote transmitter, or other type of input device 64. Results may be output to a user of the image generator 18 through an output device 66, which may comprise a printer, storage media, or any other type of output device.

The image generator 18 also comprises a generation routine 70, which is a computer software program. In FIGURE 3, the generation routine 70 is illustrated as being stored in the memory 62, where it can be executed by the processor 60. In the embodiment illustrated in FIGURE 3, the image generator 18 also comprises a database 72. The database 72 comprises image data 74 and reconstruction data 76. The image data 74 comprises information associated with the sub-images used to form or reconstruct the high-resolution image. For example, the image data 74 may comprise the sub-image data 54 recorded onto the data storage medium and received from the player 14. The reconstructed high-resolution image may also be stored in the database 72 as the image data 74. The reconstruction data 76 comprises information associated with reconstructing the high-resolution image using the image data 74. For example, the reconstruction data 76 may comprise the reconstruction data 56 recorded onto the data storage medium and received from the player 14. The image generator 18 may also comprise an analog-to-digital converter 78 for converting analog signals received from the player 14 to digital signals.

In operation, resolution-limited audio/video content contained on a data storage medium is displayed on the display device 16 using the player 14. As described above, the player 14 may comprise a conventional DVD player for reading and displaying audio/video content contained on a VCD or DVD in the form of, for example, a slide show, movie, or film clip. If a high-resolution printout or copy of a resolution-limited image is desired, a user may input the request to the player 14 using a remote transmitter or other suitable input device 64. For example, the input device 64 may be used to display a menu on the display device 16 such that a user may select a corresponding menu option to generate the desired high-resolution copy. Existing resources and functionality of the player 14 may also be used to generate the desired high-resolution copy. For example, in a slide show, each frame of the slide show may exhibit a "NEXT" and/or a "PRINT" function display. Navigation buttons associated with the player 14 may be used to select a desired function. Alternatively, the player 14 may also be configured to automatically advance the frames of the slide show after a predetermined time period unless a desired function option is selected. Accordingly, a variety of methods may be used to generate the desired high-resolution copy.

In response to the high-resolution image request, the location on the data storage medium containing the corresponding sub-images is determined using the mapping information recorded onto the data storage medium. For example, as briefly described above, the sub-images associated with the high-resolution image are generally stored at a different location on the storage medium than the corresponding resolution-limited image data. The optical head or other data reading element (not explicitly shown) of the player 14 is then transferred to such location to retrieve the sub-image data 54 and the reconstruction data 56. The sub-image data 54 and the reconstruction data 56 are then transmitted to the image generator 18 via an output port of the player 14. Each of the sub-images transmitted to the image generator 18 may be momentarily displayed on the display device 16. Additionally, the reconstruction data 56 may be encoded into a vertical blinking interval field preceding the first sub-image of a sequence of sub-images such that the image generator 18 receives the reconstruction data and print or copy request prior to receiving the associated sub-image data 52. Thus, the image data 52 and reconstruction data 56 are transmitted to the image generator 18 via an output of the player 14 generally associated with the display of resolution-limited image content.

The image generator 18 then reconstructs the high-resolution image using the image data 74 and the reconstruction data 76. For example, each sub-image may be buffered until receipt of all sub-images corresponding to the high-resolution image, at which time each sub-image may be positioned, oriented, or otherwise configured relative to each other to form the high-resolution image. The high-resolution image may then be transmitted to the output device 20, such as a printer or other device. However, as described above, the image generator 18 may also include output capabilities, such as print or display capabilities, hereby alleviating the requirement of a discrete output device 20. While the sub-images are being reconstructed, or the high-resolution image is being printed, or at some other time during the above-described process, the optical head or reading element of the player automatically returns to the location of the data storage medium containing the resolution-limited content to accommodate continued display of the slide show, movie or film clip.

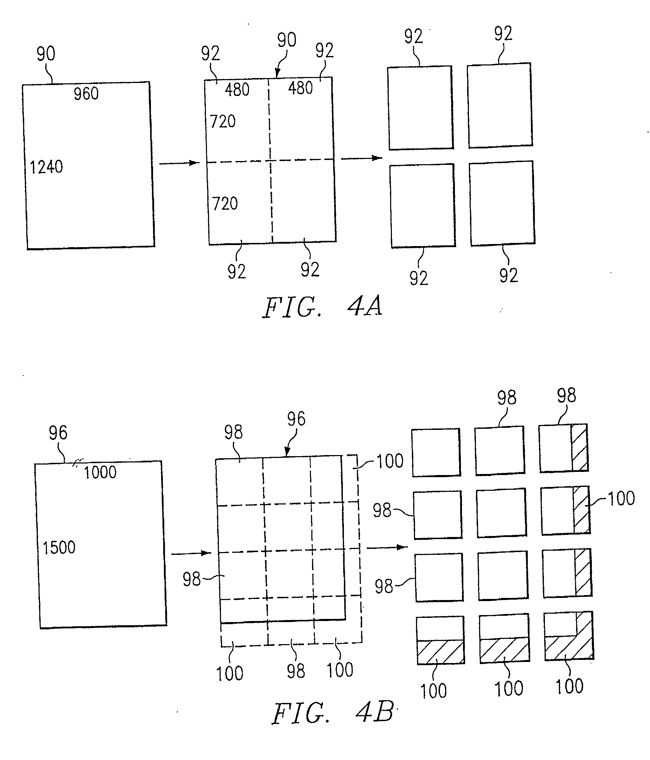

FIGURES 4A and 4B are diagrams illustrating sub-image formation corresponding to a high-resolution image in accordance with an embodiment of the present invention. Referring to FIGURE 4A, a high-resolution image 90 is illustrated having a resolution pixel value of 1240x960. If the maximum displayable resolution of the display device 16 is 720x480, the generator routine 40 may break or subdivide the image 90 into four sub-images 92 each having a resolution pixel value of 720x480. However, it should be understood that the image 90 may also be subdivided into discrete sub-images having other suitable pixel resolution values less than or equal to the maximum displayable resolution of the display device 16. Each of the sub-images 92 is then stored on the data storage medium as a sequence of discrete images. The generator routine 40 also stores or records the reconstruction data 56 on the data storage medium corresponding to the position of each of the sub-images 92 relative to each other so that the sub-images 92 may be reconstructed by the image generator 18 to form the high-resolution image 90.

Referring to FIGURE 4B, a high-resolution image 96 is illustrated having a resolution value of 1500x1000. If the maximum displayable resolution of the display device 16 is 720x480, the generator routine 40 may subdivide the image 96 into a plurality of sub-images 98 each having a resolution equal to or less than 720x480. However, the generator routine 40 may otherwise subdivide the image 96 into a plurality of lower-resolution discrete images. As illustrated in FIGURE 4B, some of the sub-images 98 may extend beyond the borders of the image 96, indicated generally at 100. The portions of the sub-images 98 indicated at 100 may be padded with pixels of a neutral color, such as brown, gray, or black, such that a display of the sub-images 98 containing the padding pixels on the display device 16 is minimally noticeable. As described above, each of the sub-images 98 are then recorded onto the data storage medium as a sequence of discrete images, along with the reconstruction data 56 for reconstructing the image 96. During reconstruction of the image 96, the padding pixels indicated generally at 100 of each of the corresponding sub-images 98 may be discarded such that the resolution of the reconstructed image corresponds to the desired resolution.

Additionally, because the signal from the player 14 may be analog in form and subject to noise, the image data may also be encoded to reduce sensitivity to noise. For example, in a 24-bit resolution image, each 24-bit pixel may be encoded as twelve 2-level pixels where the two levels selected comprise different voltage levels, such as black and white. Using this encoding scheme, each sub-image would be further subdivided such that a plurality of pixels contain information associated with a single pixel of the overall image. During reconstruction, the converter 78 may be used to distinguish between the pixel levels to capture the value of each pixel in the transmission. The transmitted image pixel values would then be assembled to formulate the pixel values of the high-resolution image. Under this scheme, greater accuracy of the transmitted image data would be obtained. Accordingly, other methods may also be used to generate and transmit the image information corresponding to the high-resolution image.

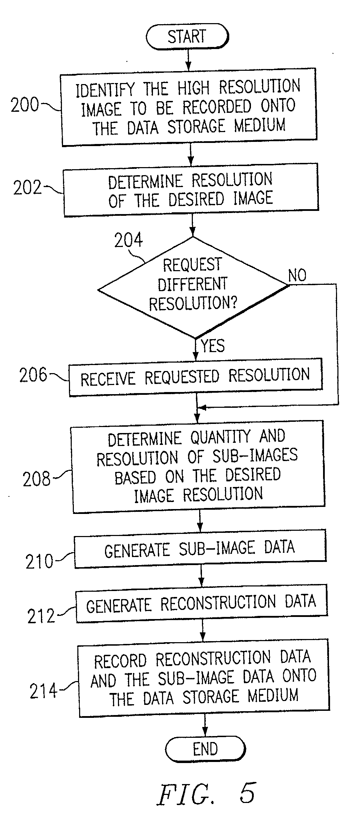

FIGURE 5 is a flowchart illustrating a method for high-resolution image generation via a resolution-limited display device in accordance with an embodiment of the present invention. The method begins at step 200, where a high-resolution image to be recorded onto the data storage medium is identified. At step 202, the generator routine 40 determines the resolution of the desired image. At decisional step 204, a determination is made whether a different resolution for the desired image is desired. For example, the generator routine 40 may be configured to generate the sub-images corresponding to the high-resolution image based on the existing resolution of the high-resolution image or based on a predetermined or preconfigured resolution setting. The user may have the option of selecting or otherwise indicating a desired resolution for the desired image. If the user desires to select or identify a different resolution for the image, the method proceeds from step 204 to step 206, where the generator routine 40 receives the requested resolution. If a different resolution value is not desired, the method proceeds from step 204 to step 208.

At step 208, the generator routine 40 determines a quantity and resolution of sub-images corresponding to the desired image based on the requested image resolution. For example, as best illustrated in FIGURES 4A and 4B, the generator routine 40 generates a sequence of discrete sub-images each having a resolution value equal to or less than a displayable resolution of the display device 16. At step 210, the generator routine 40 generates the sub-image data 54 associated with the sequence of sub-images for the desired image. Mapping or cross-reference information relating to a location of the sub-images to the location of the resolution-limited image content on the data storage medium may also be generated. At step 212, the generator routine 40 generates the reconstruction data 56 associated with the generated sub-image data 54. As described above, the reconstruction data 56 includes information associated with reconstructing the desired high-resolution image using the generated sub-images. At step 214, the generator routine 40 records the reconstruction data 56 and the sub-image data 54 onto the data storage medium.

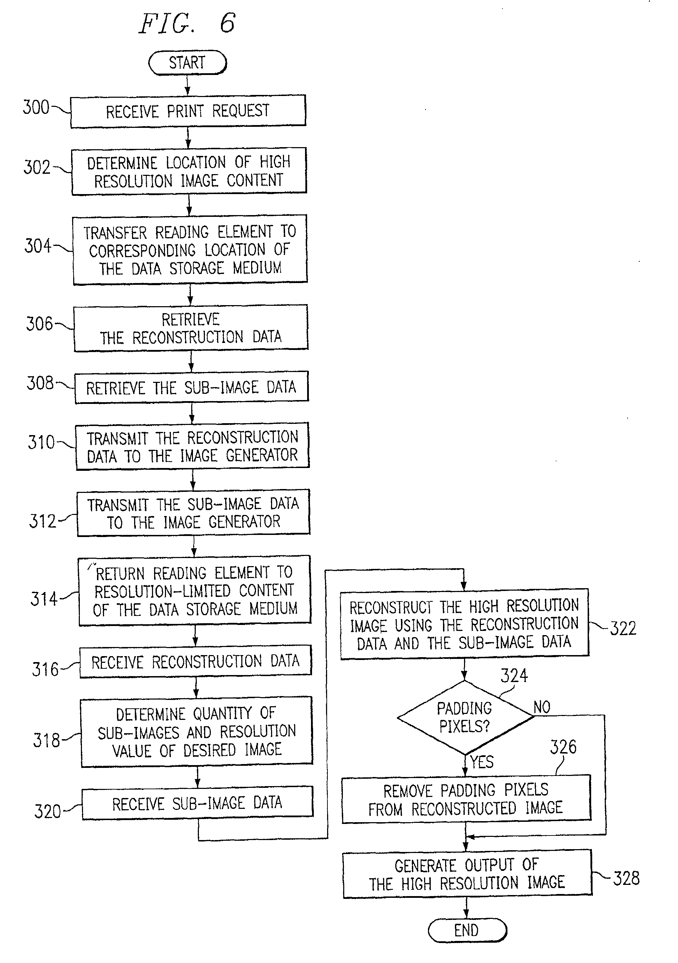

FIGURE 6 is a flowchart illustrating a method for generating a high-resolution image via a resolution-limited display device in accordance with an embodiment of the present invention. The method begins at step 300, where the player 14 receives a print request associated with a particular frame of a slide show, movie, or film segment. At step 302, in response to receiving the print request, the player 14 determines a location of the corresponding high-resolution image on the data storage medium using the sub-image data 54 recorded onto the data storage medium. At step 304, an optical head or other data reading element of the player 14 moves to the location of the data storage medium containing the sub-images corresponding to the high-resolution image.

At step 306, the player 14 retrieves the reconstruction data 56 from the data storage medium. At step 308, the player 14 retrieves the sub-image data 54 from the data storage medium. The player 14 transmits the reconstruction data 56 to the image generator 18 at step 310. For example, as described above, the reconstruction data 56 may be transmitted to the image generator 18 via a vertical blanking interval field; however, the reconstruction data 56 may also be transmitted via visible video fields. At step 312, the player 14 transmits the sub-image data 54 to the image generator 18. For example, the sub-image data 54 may be transmitted to the image generator 18 via an output port of the player 14, such as the Svideo or composite output port of the player 14. At step 314, the reading element of the player 14 returns to the location of the resolution-limited content of the data storage medium to accommodate continued display of the slide show, film clip or movie.

At step 316, the image generator 18 receives the reconstruction data 56 and stores the reconstruction data 56 in the database 72 as reconstruction data 76. At step 318, the image generator 18 determines the quantity of sub-images required to construct the high-resolution image and the resolution of the high-resolution image using the reconstruction data 76. At step 320, the image generator 18 receives the sub-image data 54 and stores the sub-image data 54 in the database 72 as the image data 74. At step 322, the generation routine 70 reconstructs the high-resolution image using the image data 74 and the reconstruction data 76.

At decisional step 324, the generation routine 70 determines whether padding pixels were included in the sub image data 54. If padding pixels were included in the sub-image data 54, the method proceeds from step 324 to step 326, where the generation routine 70 removes the padding pixels from the reconstructed image, thereby forming the high-resolution image at the desired resolution. If padding pixels were not included in the sub-image data 54, the method proceeds from step 322 to step 328. At step 328, the image generator 18 generates the high-resolution image, such as via a printer or other output device, to accommodate use and distribution.

## Claims

1. An apparatus (18) for generating a high-resolution image, comprising:
a processor (60);
a memory (62) coupled to the processor (60); and
a generation routine (70) stored in the memory (70) and executable by the processor (60), the generation routine (70) adapted to receive a plurality of sub-images from a medium player (14), the medium player (14) associated with providing a resolution-limited image to a display device (16), the generation routine (70) further adapted to generate the high-resolution image from the plurality of sub-images.

2. The apparatus (18) of Claim 1, further comprising an analog-to-digital converter (78) adapted to convert an analog signal associated with each of the plurality of sub-images to a digital signal.

3. The apparatus (18) of Claim 1, wherein the generation routine (70) is further adapted to generate the high-resolution image using reconstruction data (76) received via a vertical blanking interval field of a display device (16).

4. The apparatus (18) of Claim 1, wherein the processor (60) is adapted to receive the plurality of sub-images from a DVD player (14).

5. The apparatus (18) of Claim 1, wherein the generation routine (70) is adapted to generate the high-resolution image using reconstruction data (76), the reconstruction data (76) associated with a position of each of the plurality of sub-images relative to each other.

6. The apparatus (18) of Claim 1, wherein the processor (60) is adapted to transmit the high-resolution image to an output device (20).

7. The apparatus (18) of Claim 1, wherein the generation routine (70) is adapted to generate the high-resolution image using reconstruction data (76), the reconstruction data (76) associated with a pixel characteristic of each of the plurality of sub-images.

8. The apparatus (18) of Claim 1, further comprising a database (72) adapted to receive the plurality of sub-images and store the plurality of sub-images as image data (74), and wherein the generation routine (70) is adapted to retrieve the image data (74) in response to a user request and generate the high-resolution image using the image data (74).

9. The apparatus (18) of Claim 1, wherein at least one of the plurality of sub-mages comprises padding pixels (100), and wherein the generation routine (70) is adapted to generate the high-resolution image absent the padding pixels (100).

10. The apparatus (18) of Claim 1, wherein each of the plurality of sub-images comprises a resolution value less than or equal to a resolution value associated with the display device (16).
